(19) Europäisches Patentamt
European Patent Office
Office européen des brevets

(11) **EP 1 285 385 B1**

(12) **EUROPÄISCHE PATENTSCHRIFT**

(45) Veröffentlichungstag und Bekanntmachung des Hinweises auf die Patenterteilung:
**06.07.2005  Patentblatt 2005/27**

(51) Int Cl.7: **G06F 17/30**

(86) Internationale Anmeldenummer:
**PCT/EP2001/003189**

(21) Anmeldenummer: **01936112.0**

(22) Anmeldetag: **20.03.2001**

(87) Internationale Veröffentlichungsnummer:
**WO 2001/071577 (27.09.2001 Gazette 2001/39)**

(54) **VERFAHREN ZUM AUFFINDEN VON OBJEKTEN**

METHOD FOR FINDING OBJECTS

PROCEDE DE RECHERCHE D'OBJETS

(84) Benannte Vertragsstaaten:
**CH DE FR GB LI**

(30) Priorität: **22.03.2000  DE 10014066**

(43) Veröffentlichungstag der Anmeldung:
**26.02.2003  Patentblatt 2003/09**

(73) Patentinhaber: **Definiens AG**
**80339 München (DE)**

(72) Erfinder:
• **SCHMIDT, Günter**
**82008 Unterhaching (DE)**
• **ALVERS, Michael**
**81539 München (DE)**

(74) Vertreter: **Winter, Brandl, Fürniss, Hübner, Röss, Kaiser, Polte Partnerschaft Patent- und Rechtsanwaltskanzlei**
**Alois-Steinecker-Strasse 22**
**85354 Freising (DE)**

(56) Entgegenhaltungen:
**US-A- 6 012 069**

• **LEE D ET AL: "Indexing for complex queries on a query-by-content image database" PATTERN RECOGNITION, 1994. VOL. 1 - CONFERENCE A: COMPUTER VISION & IMAGE PROCESSING., PROCEEDINGS OF THE 12TH IAPR INTERNATIONAL CONFERENCE ON JERUSALEM, ISRAEL 9-13 OCT. 1994, LOS ALAMITOS, CA, USA,IEEE COMPUT. SOC, 9. Oktober 1994 (1994-10-09), Seiten 142-146, XP010215957 ISBN: 0-8186-6265-4**

EP 1 285 385 B1

## Beschreibung

Die vorliegende Erfindung betrifft ein computerimplementiertes Verfahren zum Auffinden von Objekten und insbesondere ein Verfahren, bei dem eine Auswahl von Hinweisen unterstützt wird, die aus Informationen gewonnen werden, die durch geeignetes Erstellen oder Aufheben einer Kennzeichnung von bereits ausgewählten Objekten in das Verfahren eingebracht werden.

Im Stand der Technik sind mehrere Suchverfahren bekannt, die dazu verwendet werden, bestimmte Objekte ausfindig zu machen.

Zum einen gibt es ein Suchverfahren, welches anhand von Stichworten und Attributwertebereichen, die durch logische Ausdrücke verknüpft sein können, eine Suche durchführt. Ein Beispiel für eine derartige Suchanfrage ist der Ausdruck "Query((Hobby IS fotografieren) AND (Alter < 40))". Als Ergebnis einer derartigen Suchanfrage werden alle diejenigen Objekte zurückgegeben, auf welche die Bedingung in der Suchanfrage zutrifft. Eine derartige Suche ist nicht bei lediglich unscharfen Größen anwendbar und scheitert häufig an Rechtschreibfehlern, Vieldeutigkeiten und Synonymen in Suchbegriffen, wie zum Beispiel "fotografieren = photographieren = knipsen".

Weiterhin gibt es Suchverfahren, die einen hierarchischen Thesaurus verwenden, was zu einem Blättern in einem Indexverzeichnis eines Buchs vergleichbar ist. Der Nachteil eines derartigen Suchverfahrens besteht darin, daß ein Benutzer abgesehen von einer fest vorgegebenen Indexstruktur nicht zu einem Ziel hingeführt wird. Ferner kann der Benutzer das Suchverfahren nicht interaktiv steuern oder beeinflussen. Ein Beispiel für ein derartiges Suchverfahren ist der Datei-Explorer in dem Betriebssystem Windows der Firma Microsoft.

Schließlich gibt es evolutionäre Suchverfahren. Bei diesen wird einem Benutzer eine Menge von Objekten angeboten. Der Benutzer beurteilt dann eines oder mehrere der Objekte nach Ähnlichkeit zu einem gesuchten Objekt und anhand dieser Information wird mittels eines genetischen oder evolutionären Algorithmus eine neue Auswahl von Objekten bestimmt, die dem Benutzer dann bekanntgegeben wird. Das Verfahren ist beendet, wenn der Benutzer in der ihm angebotenen Menge von Objekten das von ihm gesuchte Objekt erkennt. Ein Nachteil dieses Suchverfahrens besteht darin, daß die Auswahl einer angebotenen Informationsmenge ausschließlich aufgrund von Ähnlichkeiten zwischen Objekten durchgeführt wird. Das Suchverfahren wird probabilistisch durchgeführt. Dies bedeutet, daß der Benutzer lediglich zu einer bestimmten Wahrscheinlichkeit ein gesuchtes Objekt findet. Weiterhin ist unklar, wann eine Suche beendet ist.

Aus der **US-A-6 012 069** ist ein Verfahren zum interaktiven Auffinden von Objekten, d.h. Bildern, bekannt, welches Schlüsselbegriffe verwendet, die den dargestellten Bildern zugeordnet sind, und eine Benutzereingabe hinsichtlich einer Relevanz der dargestellten Bilder bezüglich eines gesuchten Bilds auswertet. Dann wird die Relevanz von allen in einer Datenbank vorhandenen Bildern zu dem gesuchten Bild berechnet und werden dem Benutzer Bilder mit einer hohen Relevanz angezeigt. Dieser Vorgang wird solange wiederholt, bis der Benutzer schließlich das gesuchte Bild gefunden hat.

Die vorliegende Erfindung ist geschaffen worden, um die zuvor erwähnten Probleme im Stand der Technik zu beseitigen.

Die Aufgabe der vorliegenden Erfindung besteht demgemäß darin, ein Verfahren zum Auffinden von Objekten zu schaffen, mittels welchem Objekte zuverlässig und einfach aufgefunden werden können.

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Genauer gesagt weist ein erfindungsgemäßes computerimplementiertes Verfahren zum Auffinden von Objekten, denen Datenstrukturen zugrunde liegen und zwischen denen ein Entfernungsmaßstab definierbar ist, wobei als Nachbarschaft zwischen Objekten ein Entfernungsmaß definiert ist, das kleiner als ein vordefinierter oder berechneter Schwellenwert ist, die folgenden Schritte auf: (a) Bekanntgeben einer Auswahl von Objekten; (b) Erstellen und/oder Aufheben einer Kennzeichnung von einem Objekt oder von mehreren Objekten der Auswahl, wobei die Kennzeichnung mittels einer Kennzeichnungsinformation erfolgt; (c) Berechnen von Wertigkeiten der Objekte der Auswahl und/oder von Objekten in einer Nachbarschaft der gekennzeichneten Objekte aufgrund der Kennzeichnungsinformation, von bereits berechneten Wertigkeiten und/oder von bereits gespeicherten Wertigkeiten; und (d) Verändern der Auswahl nach Maßgabe der in dem Schritt (c) berechneten Wertigkeiten und Fortführen des Verfahrens mit Schritt (a), bis aufzufindende Objekte in der Auswahl enthalten sind, das Verfahren abgebrochen wird oder eine gegebene oder berechnete Zahl von Verfahrensschritten durchlaufen worden ist, wobei das Verfahren nach jedem der Schritte (a) bis (d) beendbar oder abbrechbar ist.

Erfindungsgemäß wird der Effekt erzielt, daß durch das Erstellen und/oder Aufheben einer Kennzeichnung eines oder mehrerer Objekte und das Auswählen der Objekte lediglich bestimmte Objekte und nicht alle Objekte bei nachfolgenden Verfahrensschritten berücksichtigt werden müssen, so daß eine effiziente Speichernutzung ermöglicht wird, die mit bisherigen Verfahren nicht erzielt werden kann.

Ferner können durch iteratives Wiederholen der Verfahrensschritte das Erstellen und/oder Aufheben einer Kennzeichnung und/oder das Auswählen der Objekte derart an eine jeweilige Suchanfrage und ein bereits erzieltes Suchergebnis angepaßt durchgeführt werden, daß aufzufindende Objekte zuverlässig und einfach aufgefunden werden können, wodurch die Nachteile im Stand der Technik vermieden werden.

Gemäß einer Ausgestaltung der vorliegenden Erfindung werden ebenso Wertigkeiten der Objekte der Auswahl bekanntgegeben.

Gemäß einer weiteren Ausgestaltung der vorliegenden Erfindung beinhalten die Objekte Texte, Zahlen, geometrische Formen, Graphiken, Bilddokumente, Filmdokumente, Tondokumente oder Teile oder Kombinationen von diesen.

Gemäß einer weiteren Ausgestaltung der vorliegenden Erfindung werden die Wertigkeiten durch einen reellwertigen Vektor in einem n-dimensionalen Raum dargestellt.

Gemäß einer weiteren Ausgestaltung der vorliegenden Erfindung wird bei dem Erstellen einer Kennzeichnung eines Objekts dieses Objekt einem Punkt in einem n-dimensionalen Raum zugeordnet und wird bei dem Aufheben einer Kennzeichnung eines Objekts die Zuordnung des Objekts zu dem Punkt wieder aufgehoben.

Gemäß einer weiteren Ausgestaltung der vorliegenden Erfindung werden die Wertigkeiten eines Objekts mittels Farbe, Textur, Form, Tonsignalen, Animation, graphischer Kennzeichnung, textueller Kennzeichnung, Anordnung auf einer graphischen Benutzeroberfläche oder Kombinationen von diesen kenntlich gemacht.

Gemäß einer weiteren Ausgestaltung der vorliegenden Erfindung werden die Wertigkeiten eines Objekts durch die Messung von Entfernungen zu den gekennzeichneten Objekten, durch die Eigenschaften von diesen, durch die Eigenschaften von Objekten auf einem jeweiligen Pfad zu den gekennzeichneten Objekten oder durch Kombinationen von diesen bestimmt .

Gemäß einer weiteren Ausgestaltung der vorliegenden Erfindung hängt eine Vorschrift für ein Berechnen der Wertigkeiten eines Objekts von diesem Objekt oder von einem Objekt in einer Nachbarschaft von diesem ab.

Gemäß einer weiteren Ausgestaltung der vorliegenden Erfindung sind die Objekte in ein hierarchisches Objektnetzwerk eingebunden.

Gemäß einer weiteren Ausgestaltung der vorliegenden Erfindung berücksichtigt in Schritt (a) und/oder Schritt (d) die Auswahl hierarchisch höher liegende Objekte und eine Nachbarschaft von diesen.

Gemäß einer weiteren Ausgestaltung der vorliegenden Erfindung berücksichtigt in Schritt (a) und/oder Schritt (d) die Auswahl diejenigen Objekte und eine Nachbarschaft von diesen, die sich aufgrund einer textuell oder graphisch formulierten Suchanfrage als Resultat ergeben.

Gemäß einer weiteren Ausgestaltung der vorliegenden Erfindung berücksichtigt in Schritt (a) und/oder (d) die Auswahl diejenigen Objekte und eine Nachbarschaft von diesen, die aufgrund von gespeicherten Informationen bestimmte Wertigkeiten und/oder Eigenschaften besitzen.

Gemäß einer weiteren Ausgestaltung der vorliegenden Erfindung werden die berechneten Wertigkeiten und/oder die gekennzeichneten Objekte eines Benutzers oder einer Auswahl von Benutzern gespeichert und werden diese Informationen dazu verwendet, um die Wertigkeiten zu Beginn des Verfahrens festzulegen und/oder die im Verlauf des Verfahrens berechneten Wertigkeiten zu verändern.

Gemäß einer weiteren Ausgestaltung der vorliegenden Erfindung geben die berechneten Wertigkeiten in den Objekten über ein Relevanzmaß Informationen darüber ab, wie zugehörig das jeweilige Objekt zu mindestens einem gekennzeichneten Objekt ist.

Gemäß einer weiteren Ausgestaltung der vorliegenden Erfindung geben die berechneten Wertigkeiten in den Objekten über ein Relevanzmaß Informationen darüber ab, wie zugehörig das jeweilige Objekt zu allen gekennzeichneten Objekten ist.

Gemäß einer weiteren Ausgestaltung der vorliegenden Erfindung wird das Verändern der Auswahl in Schritt (d) mittels einer entsprechenden Hardwarevorrichtung durchgeführt.

Gemäß einer weiteren Ausgestaltung der vorliegenden Erfindung wird das Verändern der Auswahl in Schritt (d) automatisch anhand der berechneten Wertigkeiten durchgeführt.

Gemäß einer weiteren Ausgestaltung der vorliegenden Erfindung berücksichtigt die Auswahl in Schritt (d) diejenigen Objekte, die eine maximale Relevanz für eine Suche beinhalten und/oder Objekte in einer Nachbarschaft von diesen, wobei sich ein Relevanzmaß als eine spezielle Form einer Wertigkeit aus den anderen Wertigkeiten berechnet.

Gemäß einer weiteren Ausgestaltung der vorliegenden Erfindung entspricht die Auswahl in Schritt (d) einer Navigation in einer Menge aller Objekte, wobei bei einem Navigieren eine neue Auswahl und eine bereits bestehende Auswahl eines oder mehrere Objekte gemeinsam aufweisen.

Gemäß einer weiteren Ausgestaltung der vorliegenden Erfindung sind die Objekte in ein fraktal-hierarchisches Objektnetzwerk n-ter Art eingebunden und beeinflussen Eigenschaften der Verknüpfungen zwischen Objekten das Berechnen der Wertigkeiten in Schritt (c) und/oder die Auswahl der Objekte in Schritt (a) und/oder Schritt (d).

Die vorliegende Erfindung wird nachstehend anhand von Ausführungsbeispielen unter Bezugnahme auf die beiliegende Zeichnung näher erläutert.

Es zeigt:

**Fig. 1** eine schematische Ansicht eines ersten Verfahrensschritts bei einem Verfahren gemäß einem Ausführungsbeispiel der vorliegenden Erfindung;

**Fig. 2**     eine schematische Ansicht eines zweiten Verfahrensschritts bei dem Verfahren gemäß dem Ausführungsbeispiel der vorliegenden Erfindung;

**Fig. 3**     eine schematische Ansicht eines dritten Verfahrensschritts bei dem Verfahren gemäß dem Ausführungsbeispiel der vorliegenden Erfindung;

**Fig. 4**     eine schematische Ansicht eines vierten Verfahrensschritts bei dem Verfahren gemäß dem Ausführungsbeispiel der vorliegenden Erfindung;

**Fig. 5**     eine schematische Ansicht eines fünften Verfahrensschritts bei dem Verfahren gemäß dem Ausführungsbeispiel der vorliegenden Erfindung;

**Fig. 6**     eine schematische Ansicht eines sechsten Verfahrensschritts bei dem Verfahren gemäß dem Ausführungsbeispiel der vorliegenden Erfindung; und

**Fig. 7**     eine schematische Ansicht eines siebten Verfahrensschritts bei dem Verfahren gemäß dem Ausführungsbeispiel der vorliegenden Erfindung;

Bevor ein Ausführungsbeispiel der vorliegenden Erfindung detaillierter erläutert wird, sei darauf verwiesen, daß die vorliegende Erfindung vorteilhaft an einem semantischen oder fraktalen Netz angewendet werden kann, welches zum Beispiel in der Anmeldung des Anmelders der vorliegenden Erfindung mit dem amtlichen Aktenzeichen 199 08 204.9 und dem Titel "Fraktales Netz n-ter Ordnung zum Behandeln komplexer Strukturen", eingereicht am 25. Februar 1999, und der Anmeldung des Anmelders der vorliegenden Erfindung mit dem amtlichen Aktenzeichen 199 17 592.8 und dem Titel "Situationsabhängig operierendes semantisches Netzn-ter Ordnung", eingereicht am 19. April 1999, beschrieben ist.

Es sei jedoch darauf verwiesen, daß die vorliegende Erfindung nicht darauf beschränkt ist, an einem derartigen Objektnetzwerk angewendet zu werden. Vielmehr kann die vorliegende Erfindung überall dort angewendet werden, wo Objekte vorhanden sind, denen Datenstrukturen zugrunde liegen, und wo ein Entfernungsmaß zwischen Objekten definierbar ist.

Nachstehend erfolgt die Beschreibung eines Ausführungsbeispiels der vorliegenden Erfindung.

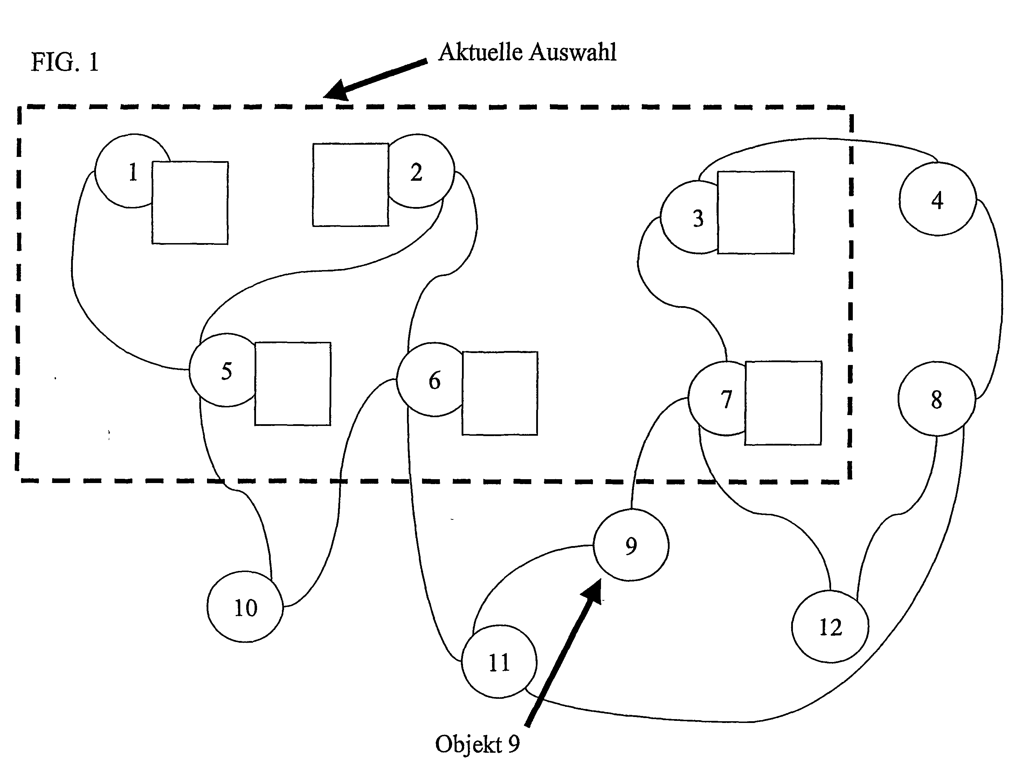

Die Figuren 1 bis 7 zeigen schematische Ansichten von ersten bis siebten Verfahrensschritten bei einem Verfahren gemäß dem Ausführungsbeispiel der vorliegenden Erfindung.

In Fig. 1 ist ein Objektnetzwerk dargestellt, das Objekte 1 bis 12 aufweist. Jedem dieser Objekte kann ein n-dimensionaler Vektor von Zahlen zugeordnet sein, welcher Wertigkeiten in dem durchzuführenden Suchverfahren repräsentiert. Wie es aus Fig. 1 ersichtlich ist, sind zu Beginn des Suchverfahrens in diesem Ausführungsbeispiel der vorliegenden Erfindung keine Wertigkeiten vergeben. In einem in Fig. 1 dargestellten gestrichelten Rahmen ist eine Auswahl eingetragen, die zu Beginn des Suchverfahrens gewählt wird. Es wird also in einem ersten Schritt des Suchverfahrens eine Auswahl von Objekten bekanntgegeben. In diesem Ausführungsbeispiel der vorliegenden Erfindung soll nach dem Objekt 9 gesucht werden, das bezüglich einer Suchanfrage in der Nachbarschaft bzw. Nähe der Objekte 7 und 11 liegt, wie es durch die die Objekte 7 und 9 und die Objekte 9 und 11 verbindenden Linien in Fig. 1 dargestellt ist. Das Objekt 9 liegt jedoch zum Beispiel nicht in der Nachbarschaft des Objekts 10.

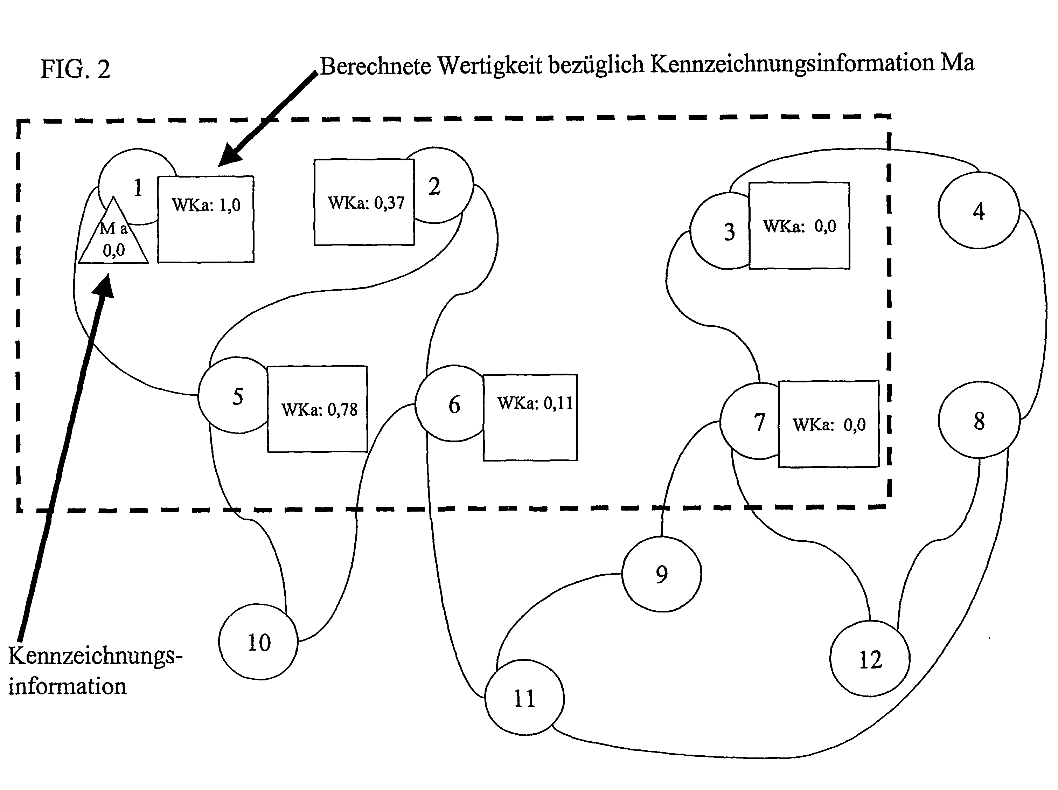

Wie es in Fig. 2 gezeigt ist, wird nunmehr das Objekt 1 von einem Benutzer durch Erstellen einer Kennzeichnung markiert und mit einer Kennzeichnungsinformation Ma = 0,0 versehen, wie es in dem dreieckigen Kasten des Objekts 1 in Fig. 2 gezeigt ist. Das heißt, es wird ein zweiter Schritt durchgeführt, in dem eine Kennzeichnung von einem Objekt oder von mehreren Objekten der Auswahl erstellt oder aufgehoben werden kann. Die Kennzeichnung erfolgt bei diesem Schritt mittels einer Kennzeichnungsinformation, wie zum Beispiel Ma, der ein bestimmter Wert zugewiesen wird, der angibt, wie relevant ein mit diesem Wert gekennzeichnetes Objekt für eine jeweilige Suche ist.

Wie es in Fig. 2 in viereckigen Kästen der Objekte 1, 2, 3, 5, 6 und 7 gezeigt ist, werden in einem dritten Schritt für alle Objekte 1, 2, 3, 5, 6 und 7 der Auswahl Wertigkeiten der Objekte 1, 2, 3, 5, 6 und 7 derart berechnet, daß sich eine Wertigkeit WKx eines Objekts K in Abhängigkeit einer Entfernung DKL von einem gekennzeichneten Objekt L mit einer Kennzeichnungsinformation Mx verhält, wie es durch die nachfolgende Gleichung (1) ausgedrückt wird:

$$WKx = \left| Mx \cdot e^{-pa \cdot DKL^{pb}} \right| \qquad (1)$$

mit: pa = 0,25 und pb = 2,0

Diese Gleichung (1) stellt eine Gaußverteilung dar. Natürlich kann auch jede andere Form und/oder Parametrisierung der Abhängigkeit verwendet werden. In diesem Ausführungsbeispiel der vorliegenden Erfindung ergeben sich für die in der Auswahl enthaltenen Objekte 1, 2, 3, 5, 6 und 7 aus der vorhergehenden Gleichung (1) Werte von WKa von 1,0, 0,37, 0,0, 0,78, 0,11 bzw. 0,0. Je höher der Wert einer Wertigkeit WKx ist, desto relevanter ist ein diese Wertigkeit aufweisendes Objekt hinsichtlich der Kennzeichnungsinformation Mx für eine jeweilige Suche.

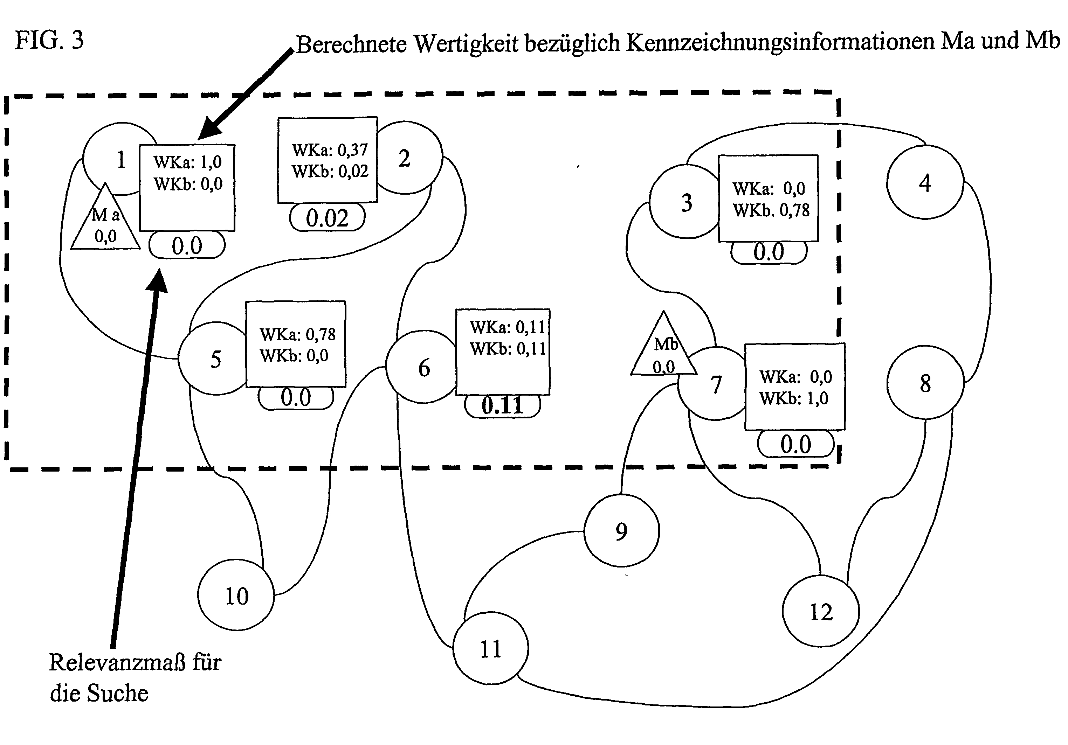

Wie es in Fig. 3 gezeigt ist, wird nunmehr bei gleicher Auswahl das Objekt 7 auf die gleiche Weise, wie es zuvor bezüglich des Objekts 1 beschrieben worden ist, mit einer Kennzeichnungsinformation Mb = 0,0 gekennzeichnet und werden Wertigkeiten WKb aller in der Auswahl vorhandenen Objekte 1, 2, 3, 5, 6 und 7 neu berechnet. In diesem Ausführungsbeispiel der vorliegenden Erfindung ergeben sich für die in der Auswahl enthaltenen Objekte 1, 2, 3, 5, 6 und 7 Wertigkeiten WKb von 0,0, 0,02, 0,78, 0,0, 0,11 bzw. 1,0. Wenn Objekte aufzufinden sind, die bestmöglich zu allen gekennzeichneten Objekten passen, so kann als eine spezielle Wertigkeit ein Relevanzmaß definiert werden. Dieses Relevanzmaß zeigt eine Information über einen Suchfortschritt an. Je größer der Wert eines Relevanzmaßes ist, desto näher befindet sich ein jeweiliges Objekt an einem gesuchten Objekt. Eine mögliche Form der Definition des Relevanzmaßes eines Objekts K ist in der nachfolgenden Gleichung (2) angegeben:

$$RK = \min(S - WKa, S - WKb, \ldots) \qquad (2)$$

mit $S = \mathrm{sum}(WKa, WKb, \ldots)$, wobei die Minimumbildung min und die Summierung sum alle Wertigkeiten $WKx$ eines Objekts erfaßt.

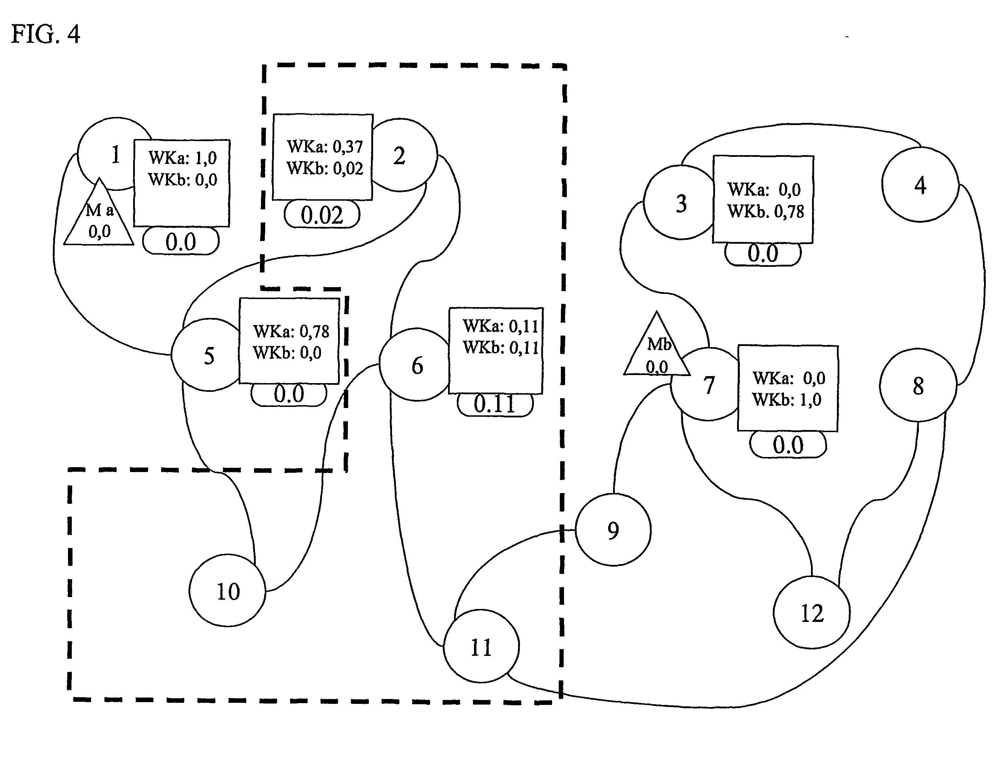

Die in diesem Ausführungsbeispiel der vorliegenden Erfindung mittels der Gleichung (2) berechneten Relevanzmaße für die in der Auswahl enthaltenen Objekte 1, 2, 3, 5, 6 und 7 sind in den ovalen Kästen der jeweiligen Objekte 1, 2, 3, 5, 6 und 7 in Fig. 3 angegeben. Es können jedoch auch andere Abhängigkeiten beim Ableiten eines Relevanzmaßes verwendet werden, was insbesondere dann möglich ist, wenn bereits in der Vergangenheit berechnete Wertigkeiten bei dem Suchverfahren eine Rolle spielen. Wie es aus Fig. 3 ersichtlich ist, ergibt sich in diesem Ausführungsbeispiel der vorliegenden Erfindung ein maximales Relevanzmaß R6 = 0,11 für das Objekt 6. Wenn nunmehr als eine neue Auswahl die Nachbarschaft um das Objekt 6 ausgewählt wird, ergibt sich die in Fig. 4 gezeigte Auswahl, die die Objekte 2, 6, 10 und 11 enthält.

Der hierin verwendete Begriff "Nachbarschaft" ist eng an den Begriff "Entfernung" gekoppelt. Als Nachbarn eines gegebenen Objekts werden alle Objekte betrachtet, die ein Entfernungsmaß zu dem gegebenen Objekt aufweisen, das kleiner als ein vordefinierter oder berechneter Schwellenwert ist. Eine Bestimmung des Entfernungsmaßes hängt vom jeweils verwendeten Verfahren ab, das entweder in der gesamten Menge von Objekten gleich ist oder an einzelne Objekte gekoppelt ist oder in jeweiligen Teilmengen der Menge von Objekten jeweils gleich ist und/oder von Eigenschaften der Objekte und/oder von Eigenschaften von Beziehungen zwischen Objekten abhängt. In diesem Ausführungsbeispiel der vorliegenden Erfindung wird das Entfernungsmaß zwischen zwei Objekten aus der minimalen Anzahl von Verknüpfungen berechnet, über die zu laufen ist, um von einem Objekt zu einem anderen zu gelangen. Die Nachbarschaft um ein gegebenes Objekt ist in diesem Ausführungsbeispiel der vorliegenden Erfindung als eine Menge von Objekten definiert, die ein Entfernungsmaß von kleiner zwei zu einem gegebenen Objekt aufweisen. Daraus ergibt sich für das Objekt 6 in Fig. 4 eine Nachbarschaft der Menge der Objekte 2, 10, 11, wie es durch den gestrichelten Rahmen als die neue Auswahl in Fig. 4 dargestellt ist.

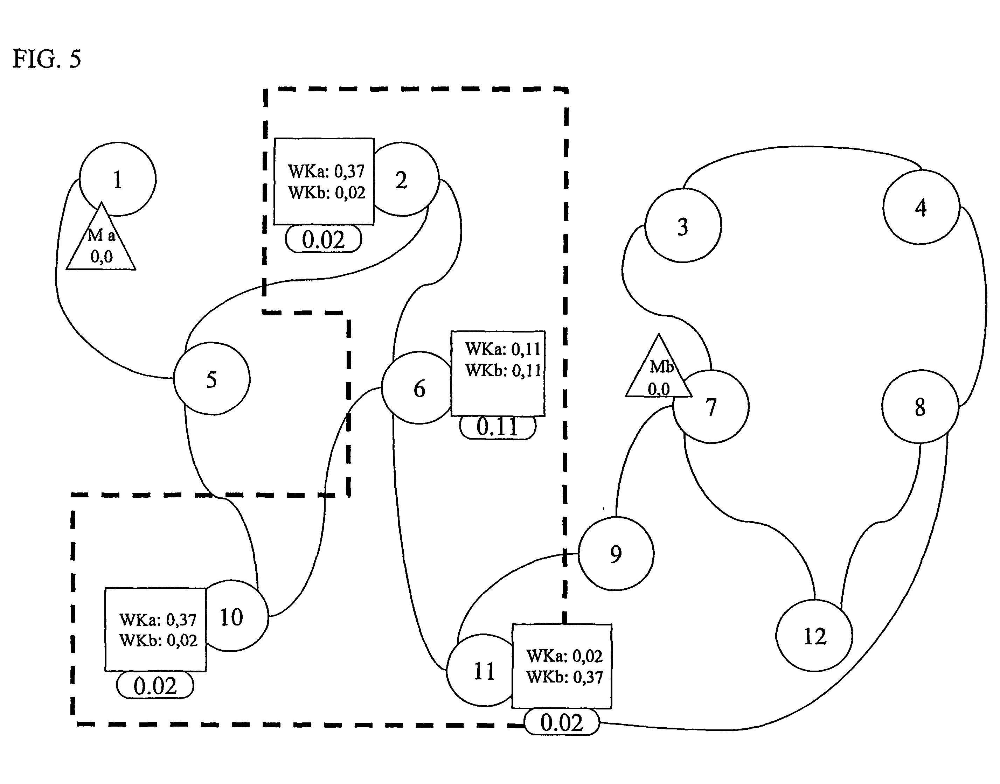

Wie es in Fig. 5 dargestellt ist, werden alle nicht bereits berechneten Wertigkeiten WKa und WKb der in der neuen Auswahl vorhandenen Objekte 2, 6, 10 und 11 neu berechnet und werden alle bereits berechneten Wertigkeiten WKa und WKb der Objekte 1, 3, 5 und 7 verworfen, die nicht mehr in der neuen Auswahl enthalten sind. Wenn ein schnelles Berechnen beim ständigen Verändern der Auswahl, wie zum Beispiel bei einem Navigieren durch das Objektnetzwerk, zu gewährleisten ist, kann es nützlich sein, alle bereits berechneten Wertigkeiten zu speichern.

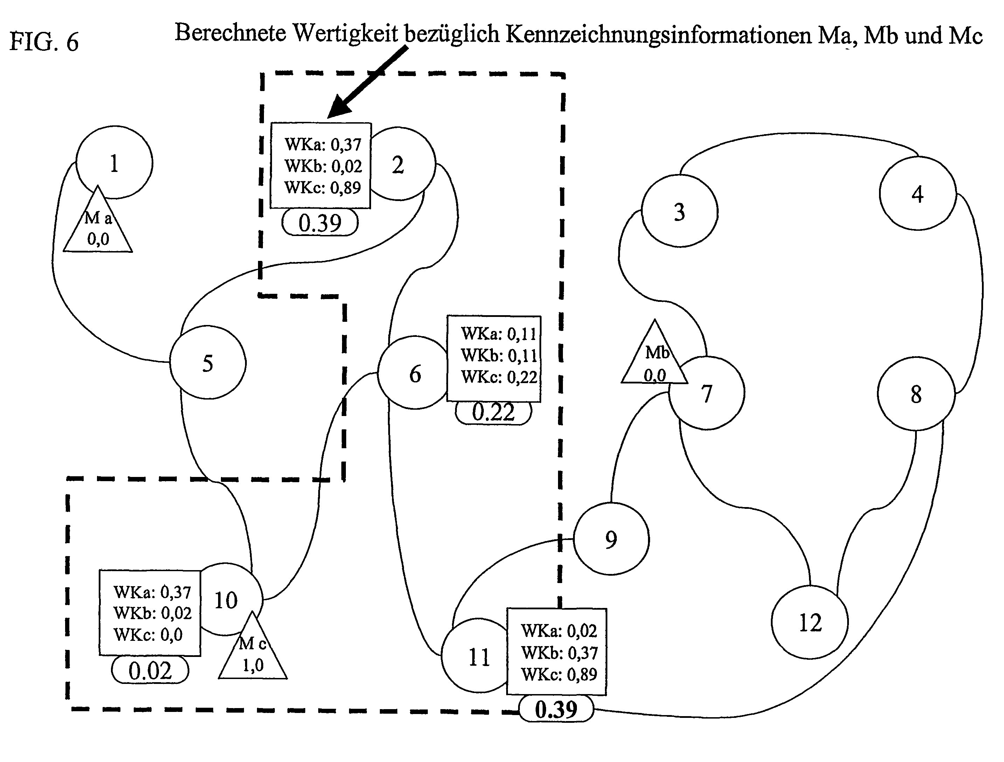

Wenn nunmehr zum Beispiel das Objekt 10 als vollkommen irrelevant für eine jeweilige Suche betrachtet wird, kann das Objekt 10 mit einer Kennzeichnungsinformation von Mc = 1,0 gekennzeichnet werden, wie es in Fig. 6 gezeigt ist. Demgemäß werden Wertigkeiten WKa, WKb und WKc und Relevanzmaße R2, R6, R10 und R11 der Objekte 2, 6, 10 und 11 neu berechnet, wie es in Fig. 6 gezeigt ist. Wie es aus Fig. 6 ersichtlich ist, ergibt sich dadurch das Objekt 11 mit einem maximalen Relevanzmaß von R11 = 0,39 als das relevanteste Objekt der vorliegenden Auswahl mit den Objekten 2, 6, 10 und 11.

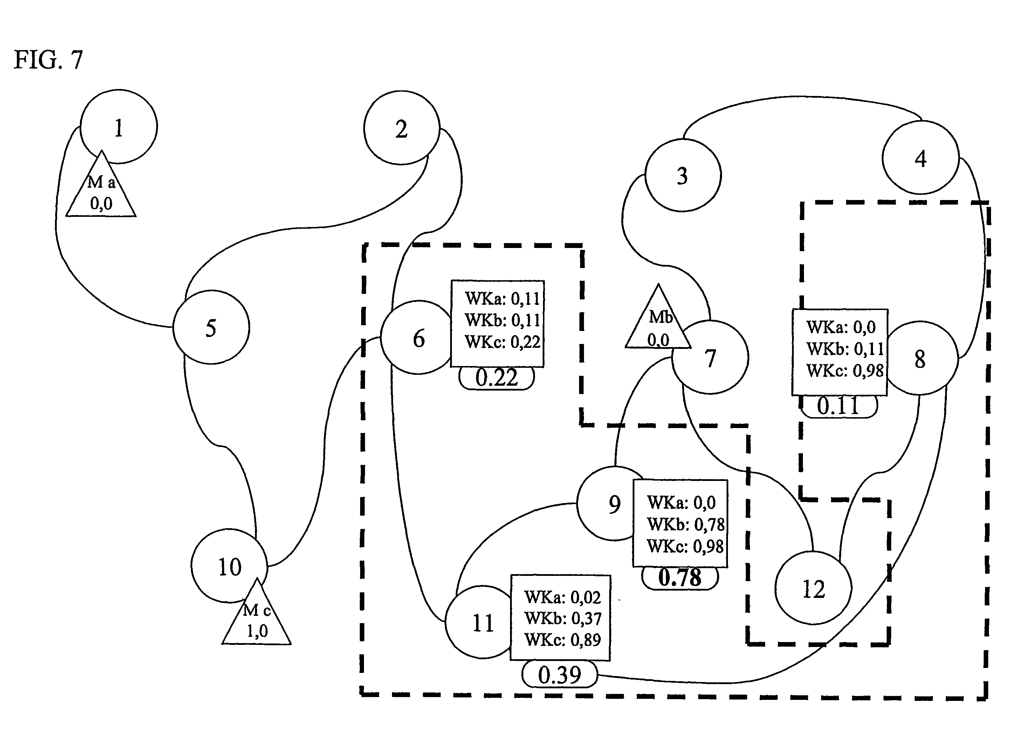

Wie es in Fig. 7 gezeigt ist, wird nunmehr die Auswahl derart verändert, daß das Objekt 11 mit dem maximalen Relevanzmaß R11 = 0,39 und dessen benachbarte Objekte 6, 8 und 9 in der neuen Auswahl enthalten sind. Nach erneutem Berechnen der Wertigkeiten WKa, WKb und WKc und der Relevanzmaße R6, R8, R9 und R11 erhält in diesem Ausführungsbeispiel der vorliegenden Erfindung das Objekt 9 das Relevanzmaß R9 = 0,78. Da es sich bei dem Objekt 9 um das gesuchte Objekt handelt, ist das gesuchte Objekt 9 in diesem Ausführungsbeispiel der vorliegenden Erfindung aufgefunden worden und kann das Verfahren beendet werden.

Das zuvor beschriebene Verfahren kann in allen Fällen vorteilhaft angewendet werden, in denen eine Suchanfrage lediglich unscharf formuliert werden kann und/oder eine Suche nach einem Objekt Informationen aus der Nachbarschaft dieses Objekts bzw. einen Kontext erfordert.

Konkrete Anwendungen sind alle Formen von Datenbankabfragen von komplex strukturierten Informationen, wie zum Beispiel Inhalte von Textdokumenten, Tondokumenten oder Bilddokumenten. Die Objekte können neben den Textdokumenten, Tondokumenten und Bildokumenten auch Texte, Zahlen, geometrische Formen, Graphiken oder Teile oder Kombinationen von allen vorhergehend aufgeführten Arten sein.

Weiterhin kann mittels des zuvor beschriebenen Verfahrens auch bei eCommerce-Lösungen ein interaktives "Führen" von Kunden hin zu Produkten, welche die Kunden erwerben wollen, oder in Helpdesk-Anwendungen die gezielte Antwortsuche auf Kundenanfragen innerhalb eines gegebenen Objektnetzwerks realisiert werden.

Mittels des zuvor beschriebenen Verfahrens besteht weiterhin die Möglichkeit, alle formulierten Anfragen an Expertensysteme zu beantworten. Dies ist insbesondere bei Expertensystemen zur Problemdiagnose in Medizin und Technik möglich. In einem medizinischen Expertensystem können zum Beispiel Patientendaten und jeweiligen Befunden zugeordnete Symptome als Objekt in einem Objektnetzwerk abgebildet werden. Mit dem zuvor beschriebenen Verfahren kann in einem derartigen Objektnetzwerk sehr einfach durch iteratives Kennzeichnen und Neuauswählen von Objekten die Anzahl der möglichen Befunde eingeschränkt werden.

Eine weitere Anwendung besteht im Bereich des Risikomamagements und der Sensitivitätsanalyse. In diesem Fall können Objekte, die Risiken darstellen, gekennzeichnet werden. Aufgrund dieser Kennzeichnung und der zuvor beschriebenen Verfahrensschritte kann dann eine Auswahl all derjenigen Objekte erzielt werden, die von diesen Risiken abhängig sind.

In einem analog umgekehrten Verfahren werden alle Objekte gekennzeichnet, deren Sensitivität auf Risiken zu untersuchen ist. Das zuvor beschriebene Verfahren findet dann iterativ eine Auswahl der Risiken auf, die auf jeweilige gekennzeichnete Objekte wirken.

Das zuvor beschriebene Ausführungsbeispiel der vorliegenden Erfindung stellt lediglich eine mögliche Ausgestaltung des erfindungsgemäßen Verfahrens dar.

Die vorliegende Erfindung ist jedoch nicht auf dieses Ausführungsbeispiel beschränkt. Weitere mögliche Ausgestaltungen des erfindungsgemäßen Verfahrens werden im weiteren Verlauf beschrieben.

Obgleich in dem zuvor beschriebenen Ausführungsbeispiel der vorliegenden Erfindung Wertigkeiten von Objekten der Auswahl berechnet werden, besteht ferner ebenso die Möglichkeit, zusätzlich oder statt dessen Wertigkeiten von Objekten in der Nachbarschaft der gekennzeichneten Objekte aufgrund der Kennzeichnungsinformation, von bereits berechneten Wertigkeiten und/oder von bereits gespeicherten Wertigkeiten zu berechnen. Das Verfahren kann fortgeführt werden, bis aufzufindende Objekte in der Auswahl enthalten sind, das Verfahren abgebrochen wird oder eine gegebene oder berechnete Anzahl von Verfahrensschritten durchlaufen worden sind. Das Verfahren kann dabei nach jedem einzelnen Verfahrensschritt beendet oder angebrochen werden.

In dem zuvor beschriebenen Ausführungsbeispiel werden zu Beginn des Verfahrens bei der Bekanntgabe einer Auswahl keine Wertigkeiten der in der Auswahl enthaltenen Objekte bekanntgegeben. Jedoch können bei der Bekanntgabe der Auswahl auch Wertigkeiten der in der Auswahl enthaltenen Objekte mit bekanntgegeben werden.

Die Wertigkeiten der Objekte können zum Beispiel durch einen reellwertigen Vektor in einem n-dimensionalen Raum dargestellt werden. Ferner kann das Erstellen einer Kennzeichnung eines Objekts derart durchgeführt werden, daß dieses Objekt einem Punkt in einem n-dimensionalen Raum zugeordnet wird. Wenn die Kennzeichnung wieder aufgehoben wird, wird die Zuordnung dieses Objekts zu dem Punkt wieder aufgehoben.

Allgemein können die Wertigkeiten des Objekts mittels Farbe, Textur, Form, Tonsignalen, Animation, graphischer Kennzeichnung, textueller Kennzeichnung, Anordnung auf einer graphischen Benutzeroberfläche oder Kombinationen von diesen kenntlich gemacht werden.

Wertigkeiten der Objekte können zum Beispiel durch die Messung von Entfernungen zu gekennzeichneten Objekten, durch die Eigenschaften von diesen, durch die Eigenschaften von Objekten auf einem jeweiligen Pfad zu den gekennzeichneten Objekten oder durch Kombinationen von diesen bestimmt werden. Ferner besteht ebenso die Möglichkeit, daß ein Berechnen der Wertigkeiten eines Objekts von diesem Objekt oder von einem Objekt in einer Nachbarschaft von diesem abhängt.

Das erfindungsgemäße Verfahren kann vorteilhaft an Objekten angewendet werden, die in ein hierarchisches Objektnetzwerk eingebunden sind, wobei ebenso die Möglichkeit besteht, daß die Auswahl hierarchisch höher liegende Objekte und eine Nachbarschaft von diesen berücksichtigt.

Bei dem erfindungsgemäßen Verfahren kann eine Suchanfrage zum Beispiel textuell oder graphisch formuliert werden. Dann berücksichtigt eine jeweilige Auswahl diejenigen Objekte und eine Nachbarschaft von diesen, die sich aufgrund der Suchanfrage als Resultat ergeben. Ferner besteht ebenso die Möglichkeit, daß eine jeweilige Auswahl diejenigen Objekte und eine Nachbarschaft von diesen berücksichtigt, die aufgrund von gespeicherten Informationen bestimmte Wertigkeiten und/oder Eigenschaften besitzen.

Eine weitere vorteilhafte Ausgestaltung der vorliegenden Erfindung besteht darin, daß berechnete Wertigkeiten und/oder gekennzeichnete Objekte eines Benutzers oder einer Auswahl von Benutzern gespeichert werden und diese Informationen dazu verwendet werden, um Wertigkeiten zu Beginn des Verfahrens festzulegen und/oder im Verlauf des Verfahrens berechnete Wertigkeiten zu verändern.

Allgemein ist unter Benutzer sowohl eine Person, eine Personengruppe, ein Softwareprogramm oder eine geeignete Hardwarevorrichtung zu verstehen, wobei zum Beispiel das Erstellen und/oder Aufheben einer Kennzeichnung und/oder das Verändern der Auswahl mittels einer entsprechenden Hardwarevorrichtung durchgeführt werden kann. Es besteht jedoch auch die Möglichkeit, das eine Auswahl automatisch anhand von berechneten Wertigkeiten verändert wird.

Berechnete Wertigkeiten in den Objekten können über das Relevanzmaß entweder Informationen darüber abgeben, wie zugehörig ein jeweiliges Objekt zu mindestens einem gekennzeichneten Objekt ist, oder Informationen darüber abgeben, wie relevant ein jeweiliges Objekt zu allen gekennzeichneten Objekten ist.

Die Auswahl kann einer Navigation in einer Menge aller Objekte entsprechen. Wenn eine Navigation durchgeführt wird, können eine neue Auswahl und eine bereits bestehende Auswahl eines oder mehrere Objekte gemeinsam aufweisen.

Schließlich können die Objekte in ein fraktal-hierarchisches Netz n-ter Art eingebunden sein und können Eigenschaften von Verknüpfungen zwischen Objekten das Berechnen von Wertigkeiten und die Auswahl von Objekten beeinflussen.

Es ist demgemäß ersichtlich, daß die vorliegende Erfindung auf verschiedenste Weisen realisiert werden kann, so daß die vorliegende Erfindung als nicht lediglich auf das zuvor beschriebene Ausführungsbeispiel beschränkt zu betrachten ist.

**Patentansprüche**

1. Computerimplementiertes Verfahren zum Auffinden von Objekten, denen Datenstrukturen zugrunde liegen und wobei zwischen den objekten ein Entfernungsmaß definierbar ist, wobei als Nachbarschaft zwischen Objekten ein Entfernungsmaß definiert ist, das kleiner als ein vordefinierter oder berechneter Schwellenwert ist, wobei das Verfahren durch die folgenden Schritte **gekennzeichnet** ist

   **(a)** Bekanntgeben einer Auswahl von Objekten;
   **(b)** Erstellen und/oder Aufheben einer Kennzeichnung von einem Objekt oder von mehreren Objekten der Auswahl, wobei die Kennzeichnung mittels einer Kennzeichnungsinformation erfolgt;
   **(c)** Berechnen von Wertigkeiten der Objekte der Auswahl und/oder von Objekten in einer Nachbarschaft der gekennzeichneten Objekte aufgrund der Kennzeichnungsinformation, von bereits berechneten Wertigkeiten und/oder von bereits gespeicherten Wertigkeiten; und
   **(d)** Verändern der Auswahl nach Maßgabe der in dem Schritt **(c)** berechneten Wertigkeiten und Fortführen des Verfahrens mit Schritt **(a)**, bis aufzufindende Objekte in der Auswahl enthalten sind, das Verfahren abgebrochen wird oder eine gegebene oder berechnete Zahl von Verfahrensschritten durchlaufen worden ist, wobei das Verfahren nach jedem der Schritte

**(a)** bis **(d)** beendbar oder abbrechbar ist.

2. Verfahren nach Anspruch 1, wobei im Schritt **(a)** ebenso Wertigkeiten der Objekte der Auswahl bekanntgegeben werden.

3. Verfahren nach einem der vorhergehenden Ansprüche, wobei die Objekte Texte, Zahlen, geometrische Formen, Graphiken, Bilddokumente, Filmdokumente, Tondokumente oder Teile oder Kombinationen von diesen beinhalten.

4. Verfahren nach einem der vorhergehenden Ansprüche, wobei die Wertigkeiten durch einen reellwertigen Vektor in einem n-dimensionalen Raum dargestellt werden.

5. Verfahren nach einem der vorhergehenden Ansprüche, wobei bei dem Erstellen einer Kennzeichnung eines Objekts dieses Objekt einem Punkt in einem n-dimensionalen Raum zugeordnet wird und bei dem Aufheben einer Kennzeichnung eines Objekts die Zuordnung des Objekts zu dem Punkt wieder aufgehoben wird.

6. Verfahren nach einem der vorhergehenden Ansprüche, wobei die Wertigkeiten eines Objekts mittels Farbe, Textur, Form, Tonsignalen, Animation, graphischer Kennzeichnung, textueller Kennzeichnung, Anordnung auf einer graphischen Benutzeroberfläche oder Kombinationen von diesen kenntlich gemacht werden.

7. Verfahren nach einem der vorhergehenden Ansprüche, wobei die Wertigkeiten eines Objekts durch die Messung von Entfernungen zu den gekennzeichneten Objekten, durch die Eigenschaften von diesen, durch die Eigenschaften von Objekten auf einem jeweiligen Pfad zu den gekennzeichneten Objekten oder durch Kombinationen von diesen bestimmt werden.

8. Verfahren nach einem der vorhergehenden Ansprüche, wobei eine Vorschrift für ein Berechnen der Wertigkeiten eines Objekts von diesem Objekt oder von einem Objekt in einer Nachbarschaft von diesem abhängt.

9. Verfahren nach einem der vorhergehenden Ansprüche, wobei die Objekte in ein hierarchisches Objektnetzwerk eingebunden sind.

10. Verfahren nach Anspruch 9, wobei in Schritt **(a)** und/oder Schritt **(d)** die Auswahl hierarchisch höher liegende Objekte und eine Nachbarschaft von diesen berücksichtigt.

11. Verfahren nach einem der vorhergehenden Ansprüche, wobei in Schritt **(a)** und/oder Schritt **(d)** die Auswahl diejenigen Objekte und eine Nachbarschaft von diesen berücksichtigt, die sich aufgrund einer textuell oder graphisch formulierten Suchanfrage als Resultat ergeben.

**12.** Verfahren nach einem der Ansprüche 1 bis 10, wobei in Schritt **(a)** und/oder **(d)** die Auswahl diejenigen Objekte und eine Nachbarschaft von diesen berücksichtigt, die aufgrund von gespeicherten Informationen bestimmte Wertigkeiten und/oder Eigenschaften besitzen.

**13.** Verfahren nach einem der vorhergehenden Ansprüche, wobei die berechneten Wertigkeiten und/oder die gekennzeichneten Objekte eines Benutzers oder einer Auswahl von Benutzern gespeichert werden und diese Informationen dazu verwendet werden, um die Wertigkeiten zu Beginn des Verfahrens festzulegen und/oder die im Verlauf des Verfahrens berechneten Wertigkeiten zu verändern.

**14.** Verfahren nach einem der vorhergehenden Ansprüche, wobei die berechneten Wertigkeiten in den Objekten über ein Relevanzmaß Informationen darüber abgeben, wie zugehörig das jeweilige Objekt zu mindestens einem gekennzeichneten Objekt ist.

**15.** Verfahren nach einem der Ansprüche 1 bis 13, wobei die berechneten Wertigkeiten in den Objekten über ein Relevanzmaß Informationen darüber abgeben, wie zugehörig das jeweilige Objekt zu allen gekenzeichneten Objekten ist.

**16.** Verfahren nach einem der vorhergehenden Ansprüche, wobei das Verändern der Auswahl in Schritt **(d)** mittels einer entsprechenden Hardwarevorrichtung durchgeführt wird.

**17.** Verfahren nach einem der Ansprüche 1 bis 15, wobei das Verändern der Auswahl in Schritt **(d)** automatisch anhand der berechneten Wertigkeiten durchgeführt wird.

**18.** Verfahren nach Anspruch 17, wobei die Auswahl in Schritt **(d)** diejenigen Objekte, die eine maximale Relevanz für eine Suche beinhalten und/oder Objekte in einer Nachbarschaft von diesen berücksichtigt, wobei sich ein Relevanzmaß als eine spezielle Form einer Wertigkeit aus den anderen Wertigkeiten berechnet.

**19.** Verfahren nach einem der vorhergehenden Ansprüche, wobei die Auswahl in Schritt **(d)** einer Navigation in einer Menge aller Objekte entspricht, wobei bei einem Navigieren eine neue Auswahl und eine bereits bestehende Auswahl eines oder mehrere Objekte gemeinsam aufweisen.

**20.** Verfahren nach Anspruch 1, wobei die Objekte in ein fraktal-hierarchisches Objektnetzwerk n-ter Art eingebunden sind und Eigenschaften von Verknüpfungen zwischen Objekten das Berechnen der Wertigkeiten in Schritt **(c)** und/oder die Auswahl der Objekte in Schritt **(a)** und/oder Schritt **(d)** beeinflussen.

**Claims**

**1.** Computer-implemented method for finding objects which are based on data structures and wherein between said objects a measure of distance is definable which is smaller than a predefined or calculated threshold, said method being ***characterized by*** the following steps:

(a) announcing a selection of objects;
(b) generating and/or invalidating a characterization of one object or several objects of said selection, wherein characterization is effected by means of characterization information;
(c) calculating weights of the objects of said selection and/or of objects in a vicinity of said **characterized** objects based on said characterization information, weights already calculated, and/or weights already stored; and
(d) modifying said selection according to said weights calculated in step (c) and continuing said method from step (a) until objects to be found are contained in said selection, until said method is interrupted, or until a given or calculated number of method steps has been carried out, wherein said method may be terminated or interrupted after any one of steps (a) to (d).

**2.** The method of claim 1, wherein in step (a) weights of said objects of said selection may also be announced.

**3.** The method of one of the preceding claims, wherein said objects include texts, numerals, geometrical shapes, graphic representations, picture documents, video documents, audio documents or parts or combinations of these.

**4.** The method of one of the preceding claims, wherein said weights are represented through a vector having a real-number value in an n-dimensional space

**5.** The method of one of the preceding claims, wherein upon generating a characterization of an object, this object is associated with a point in an n-dimensional space, and upon invalidating a characterization of an object, the association of said object with this point is invalidated again.

**6.** The method of one of the preceding claims, wherein said weights of an object are labelled with the aid of color, texture, shape, acoustic signals, animation, graphical charactenzation, textual characterization, arrangement on a graphic user surface, or combinations of these.

7. The method of one of the preceding claims, wherein said weights of an object are determined through measurement of the distances from said **characterized** objects, through the properties of the latter, through the properties of objects on a respective path to said **characterized** objects, or through combinations of these.

8. The method of one of the preceding claims, wherein a prescription for a calculation of said weights of an object depends on this object or on an object in a vicinity thereof.

9. The method of one of the preceding claims, wherein said objects are integrated into a hierarchical network of objects.

10. The method of claim 9, wherein in step (a) and/or step (d) said selection takes into consideration objects having a higher position in the hierarchy as well as a vicinity of these.

11. The method of one of the preceding claims, wherein in step (a) and/or step (d) said selection takes into consideration those objects and a vicinity thereof which result from a textually or graphically formulated query.

12. The method of one of claims 1 to 10, wherein in step (a) and/or (d) said selection takes into consideration those objects and a vicinity thereof which possess particular weights and/or properties based on stored information.

13. The method of one of the preceding claims, wherein said calculated weights and/or said **characterized** objects of a user or of a selection of users are stored, and this information is used for setting said weights at the outset of said method and/or for modifying said weights calculated in the course of said method.

14. The method of one of the preceding claims, wherein through a measure of relevance said calculated weights in said objects provide information on the extent to which a respective object pertains to at least one **characterized** object.

15. The method of one of claims 1 to 13, wherein through a measure of relevance said calculated weights in said objects provide information on the extent to which a respective object pertains to all **characterized** objects.

16. The method of one of the preceding claims, wherein modifying said selection in step (d) is performed with the aid of a corresponding hardware device.

17. The method of one of claims 1 to 15, wherein modifying said selection in step (d) is performed automatically with the aid of said calculated weights.

18. The method of claim 17, wherein in step (d) said selection takes into consideration those objects including a maximum relevance for a search, and/or objects in a vicinity thereof, with a measure of relevance being calculated as a special form of a weight based on the other weights.

19. The method of one of the preceding claims, wherein in step (d) said selection corresponds to navigating in a quantity of all objects, with a new selection and an already existing selection jointly comprising one or several objects in a navigation.

20. The method of claim 1, wherein said objects are integrated into an nth-order fractal-hierarchical network of objects, and properties of the links between objects influence calculation of the weights in step (c) and/or selection of objects in step (a) and/or step (d).

## Revendications

1. Procédé réalisé par ordinateur pour la recherche d'objets, dont la base est constituée de données de structure, et une mesure d'éloignement étant définissable entre les objets, une mesure d'éloignement, qui est inférieure à une valeur seuil prédéfinie ou calculée, étant définie comme proximité entre des objets, le procédé étant **caractérisé par** les étapes suivantes :

   (a) Communication d'une sélection d'objets ;
   (b) Elaboration et/ou suppression d'une identification d'un objet ou de plusieurs objets de la sélection par un utilisateur, l'identification se faisant à l'aide d'une information d'identification ;
   (c) Calcul des significations des objets de la sélection et/ou d'objets à proximité des objets identifiés du fait de l'information d'identification, de significations déjà calculées et/ou de significations déjà mémorisées ; et
   (d) Modification de la sélection en fonction des significations calculées au cours de l'étape (c) et poursuite du procédé par l'étape (a) jusqu'à ce que les objets à rechercher soient compris dans la sélection, le procédé soit interrompu ou un nombre donné ou calculé d'étapes de procédé ait été exécuté, le procédé pouvant être terminé ou interrompu après chacune des étapes (a) à (d).

2. Procédé selon la revendication 1, dans lequel des significations des objets de la sélection sont également communiquées au cours de l'étape (a).

3. Procédé selon l'une quelconque des revendications précédentes, dans lequel les objets contiennent des textes, des chiffres, des formes géométriques, des graphiques, des documents graphiques, des documents cinématographiques, des documents sonores ou des parties ou des combinaisons de ceux-ci.

4. Procédé selon l'une quelconque des revendications précédentes, dans lequel les significations sont représentées par un vecteur de signification réelle dans un espace à n dimensions.

5. Procédé selon l'une quelconque des revendications précédentes, dans lequel, lors de l'élaboration d'une identification d'un objet, cet objet est affecté à un point dans un espace à n dimensions et, lors de la suppression d'une identification d'un objet, l'affectation de l'objet au point est supprimée.

6. Procédé selon l'une quelconque des revendications précédentes, dans lequel les significations d'un objet sont identifiées à l'aide d'une couleur, d'une texture, d'une forme, de signaux audio, d'animation, d'un marquage graphique, d'un marquage de texte, d'un agencement sur une interface utilisateur graphique ou de leurs combinaisons.

7. Procédé selon l'une quelconque des revendications précédentes, dans lequel les significations d'un objet sont déterminées par la mesure des distances par rapport aux objets à identifier, par les propriétés de ceux-ci, par les propriétés d'objets sur un trajet vers les objets identifiés ou par des combinaisons de ceux-ci.

8. Procédé selon l'une quelconque des revendications précédentes, dans lequel une instruction pour le calcul des significations d'un objet dépend de cet objet ou d'un objet à proximité de celui-ci.

9. Procédé selon l'une quelconque des revendications précédentes, dans lequel les objets sont intégrés dans un réseau d'objets hiérarchisé.

10. Procédé selon la revendication 9, dans lequel la sélection prend en compte des objets hiérarchiquement plus élevés et une proximité de ceux-ci au cours de l'étape (a) et/ou de l'étape (d).

11. Procédé selon l'une quelconque des revendications précédentes, dans lequel, au cours de l'étape (a) et/ou de l'étape (d), la sélection prend en compte les objets et une proximité de ceux-ci qui résultent d'une demande de recherche formulée de manière textuelle ou graphique.

12. Procédé selon l'une quelconque des revendications 1 à 10, dans lequel, au cours de l'étape (a) et/ou de l'étape (d), la sélection prend en compte les objets et une proximité de ceux-ci qui ont des significations et/ou des propriétés déterminées sur la base d'informations mémorisées.

13. Procédé selon l'une quelconque des revendications précédentes, dans lequel les significations calculées et/ou les objets identifiés d'un utilisateur ou d'une sélection d'utilisateurs sont mémorisés et ces informations sont utilisées pour déterminer les significations au démarrage du procédé et/ou pour modifier les significations calculées pendant le déroulement du procédé.

14. Procédé selon l'une quelconque des revendications précédentes, dans lequel les significations calculées donnent des informations dans les objets, au moyen d'une mesure de pertinence, sur la correspondance de l'objet concerné à au moins un objet identifié.

15. Procédé selon l'une quelconque des revendications 1 à 13, dans lequel les significations calculées donnent des informations dans les objets, au moyen d'une mesure de pertinence, sur la correspondance de l'objet concerné à tous les objets identifiés.

16. Procédé selon l'une quelconque des revendications précédentes, dans lequel la modification de la sélection au cours de l'étape (d) est réalisée au moyen d'un dispositif matériel approprié.

17. Procédé selon l'une quelconque des revendications 1 à 15, dans lequel la modification de la sélection au cours de l'étape (d) est réalisée automatiquement à l'aide des significations calculées.

18. Procédé selon la revendication 17, dans lequel la sélection au cours de l'étape (d) prend en considération les objets qui présentent une pertinence maximale pour une recherche et/ou les objets à proximité de ceux-ci, une mesure de pertinence étant calculée comme une forme spéciale de signification à partir des autres significations.

19. Procédé selon l'une quelconque des revendications précédentes, dans lequel la sélection au cours de l'étape (d) correspond à une navigation dans une quantité de tous les objets, moyennant quoi, lors d'une navigation, une nouvelle sélection et une sélection déjà existante présentent en commun un ou plusieurs objets.

20. Procédé selon la revendication 1, dans lequel les objets sont intégrés dans un réseau d'objets hiérarchisé de manière fractale de type n et les propriétés des connexions entre les objets influencent le calcul des significations au cours de l'étape (C) et/ou la sélection des objets au cours de l'étape (a) et/ou de l'étape (d).

FIG. 1

Aktuelle Auswahl

Objekt 9

EP 1 285 385 B1

FIG. 2

Berechnete Wertigkeit bezüglich Kennzeichnungsinformation Ma

Kennzeichnungsinformation

FIG. 3



FIG. 3

Berechnete Wertigkeit bezüglich Kennzeichnungsinformationen Ma und Mb

Relevanzmaß für die Suche

EP 1 285 385 B1

FIG. 4

EP 1 285 385 B1

FIG. 5

FIG. 6

Berechnete Wertigkeit bezüglich Kennzeichnungsinformationen Ma, Mb und Mc

FIG. 7